Europäisches Patentamt

European Patent Office

Office européen des brevets

(11) Numéro de publication : **0 171 309 B2**

(12) **NOUVEAU FASCICULE DE BREVET EUROPEEN**

(45) Date de publication du nouveau fascicule du brevet : **25.03.92 Bulletin 92/13**

(21) Numéro de dépôt : **85401346.3**

(22) Date de dépôt : **03.07.85**

(51) Int. Cl.⁵ : **B29B 13/02, E06B 3/66, B05C 9/14, B05C 21/00, B67D 5/62**

(54) **Préparation d'une matière plastique en vue de son extrusion notamment sous la forme d'un cordon calibré destiné à servir de joint et d'intercalaire dans les vitrages multiples.**

(30) Priorité : **10.07.84 FR 8410946**
**17.09.84 FR 8414181**
**17.09.84 FR 8414182**
**17.09.84 FR 8414183**
**17.09.84 FR 8414184**

(43) Date de publication de la demande :
**12.02.86 Bulletin 86/07**

(45) Mention de la délivrance du brevet :
**11.10.89 Bulletin 89/41**

(45) Mention de la décision concernant l'opposition :
**25.03.92 Bulletin 92/13**

(84) Etats contractants désignés :
**AT BE CH DE FR GB IT LI LU NL SE**

(56) Documents cités :
**EP-A- 0 115 479**

(56) Documents cités :
**DE-C- 2 816 437**
**FR-A- 2 207 799**
**GB-A- 2 016 960**
**GB-A- 2 049 815**
**US-A- 3 412 903**
**US-A- 4 024 854**
**US-A- 4 205 104**
**US-A- 4 227 069**

(73) Titulaire : **SAINT GOBAIN VITRAGE INTERNATIONAL**
**"Les Miroirs" 18, avenue d'Alsace**
**F-92400 Courbevoie (FR)**

(72) Inventeur : **Lenhardt, Karl**
**Industriestrasse 2-4**
**W-7531 Neuhausen-Hamberg (DE)**

(74) Mandataire : **Leconte, Jean-Gérard et al**
**Saint-Gobain Recherche 39, Quai Lucien Lefranc**
**F-93304 Aubervilliers Cedex (FR)**

EP 0 171 309 B2

Jouve, 18, rue Saint-Denis, 75001 PARIS

**Description**

La présente invention se rapporte à la distribution d'une matière plastique du type caoutchouc butyl, notamment en vue de l'extrusion du cordon destiné à servir de joint et d'intercalaire dans des vitrages multiples et elle concerne plus spécialement la préparation de ladite matière plastique et son acheminement depuis un réservoir où elle est dure, visqueuse et à température relativement basse jusqu'à une buse d'extrusion, éventuellement mobile par rapport au réservoir, où elle doit posséder une viscosité et une dureté bien inférieures à celles qu'elle avait initialement dans le réservoir, ainsi qu'une température plus élevée.

Il est connu par le brevet français 2 211 413 pour préparer une matière plastique du type caoutchouc butyl en vue de l'extrusion d'un cordon destiné à être déposé sur une feuille de verre pour réaliser un vitrage multiple, de travailler à partir de quantités réduites de matière, facilement et rapidement réchauffables, pour obtenir les caractéristiques de viscosité et de dureté satisfaisantes d'une part pour l'extrusion du cordon, d'autre part pour le collage du cordon ainsi extrudé sur une feuille de verre. En outre, suivant ce brevet antérieur, l'ensemble d'extrusion est fixe et ce sont les feuilles de verre qui se déplacent afin de recevoir successivement le long de tous leurs bords le cordon extrudé.

Cette technique antérieure donne satisfaction, cependant en vue de l'augmentation des cadences de fabrication d'une part, en vue de l'augmentation des dimensions des cordons extrudés d'autre part, on a pensé travailler non plus à partir de quantités réduites de matière, ce qui obligerait à des arrêts de réalimentation trop fréquents, mais à partir de grandes quantités de matière, notamment directement à partir des fûts de matière brute livrés par le fournisseur.

Ces quantités importantes sont plus difficilement réchauffables que de faibles quantités ce qui pénalise les débits et les cadences alors qu'en fait on cherche au contraire à augmenter lesdits débits et lesdites cadences.

Il est certes connu par le document de brevet GB-A-2 048 815 de pomper des "Hot melts" directement dans des grands fûts en ajustant un piston plat et perforé sur lesdits fûts, en pressant ce piston contre la matière contenue dans le fût tout en chauffant ladite matière en contact avec ce piston plat et perforé à l'aide de moyens chauffants équipant ce piston plat, la matière ramollie par les moyens chauffants et ayant traversé les perforations du piston disposées entre les éléments chauffants étant alors pompée dans l'espace situé au-dessus du piston. Mais il s'agit de "Hot melts", c'est-à-dire de matières dont la viscosité diminue de façon très importante sous l'effet de la température et d'autres matières du type caoutchouc butyl n'ont pas la faculté de voir leur viscosité diminuer aussi rapidement et dans d'aussi grandes proportions par chauffage. Le même traitement à l'aide des mêmes dispositifs est pratiquaient sans résultat avec du caoutchouc butyl.

Par ailleurs, la société Glastechn Industrie Peter Lisec commercialise sous la dénomination LAV 10V, une machine destinée à la préparation d'une matière plastique du type Hot melt ou silicone, c'est-à-dire de produits certes très visqueux quand ils sont dans le fût mais qui se ramollissent facilement en fondant dès qu'ils sont chauffés. Dans le circuit, ils sont donc relativement fluides, ce qui n'est pas le cas du caoutchouc butyl qui se doit de rester assez dur (le caoutchouc butyl sert à séparer provisoirement les feuilles de verre en substitution d'un intercalaire métallique). Ces différences de caractéristiques des matières plastiques se retrouvent au niveau des machines de pompage. En effet la machine LAV 10V comporte un réservoir de matière plastique sur lequel est posé un couvercle plat chauffant. La matière ramollie est extraite par une pompe montée sur ce couvercle appliqué avec pression sur la matière plastique dans le réservoir. Cette matière ramollie est ensuite conduite par un circuit jusqu'à la buse d'enduction, son débit étant régularisé au moyen d'une chambre à volume variable faite d'un corps élastique pressurisé.

Comme dans le cas du brevet GB-A-2 048 815 précité, le couvercle plat chauffant présente l'inconvénient de ne pas permettre de ramollissement progressif de la matière ce qui dans le cas du caoutchouc butyl conduirait à des pressions et des températures très élevées rendant le produit impropre à son rôle d'intercalaire provisoire.

Pour obtenir à la sortie d'une buse d'extrusion une matière qui convienne, du type caoutchouc butyl, avec le débit souhaitable, à la température convenable, différentes étapes de préparation de la matière sont donc à créer, ce qui nécessite des circuits pour alimenter ces différentes étapes.

En outre, on a également pensé à mettre en oeuvre une technique de pose du cordon sur les feuilles de verre dans laquelle la buse fournissant le cordon ne serait plus fixe, mais se déplacerait, au moins dans une direction. Donc les circuits conduisant de la matière brute jusqu'à la buse ont nécessairement une longueur relativement importante et ne peuvent pas être fixes. Pour véhiculer la matière le long de ces circuits, il est, d'une part, comme déjà dit, impossible de la réchauffer suffisamment en vue d'abaisser sa viscosité, d'autre part pas souhaitable non plus de trop la réchauffer, de façon à ne pas la dégrader. Il est donc nécessaire au cours des différentes étapes de préparation de la matière plastique de combiner un chauffage modéré et une mise sous pression.

Il est connu de véhiculer des matières plastiques dans des tuyaux souples éventuellement gainés, mais notre matière est, à certains instants de son trajet, à des pressions de plus de 300 bars et à des températures supérieures à 100°C et les tuyaux connus sont incapables de résister à la fois à cette température et à cette pression.

La présente invention vise à éviter les inconvénients des techniques antérieures, à savoir essentiellement buse fixe, arrêts fréquents de réalimentation dus à l'emploi de quantités réduites de matière de base.

Elle envisage de permettre la distribution d'une matière plastique à débit élevé et en continu lorsque nécessaire, au travers d'au moins une buse mobile, ladite matière plastique étant issue d'un réservoir de grande importance où elle est disponible avec une viscosité et une dureté élevées, bien supérieures à celles qu'il est nécessaire qu'elle ait à sa sortie au travers de la buse.

Pour cela, l'invention propose une installation de préparation d'une matière plastique du type caoutchouc butyl comportant un réservoir contenant la matière plastique brute ayant une viscosité et une dureté élevées et une buse de sortie pour l'extrusion de ladite matière plastique, notamment sous la forme d'un cordon calibré, sous une viscosité et une dureté inférieures à celles de la matière à l'état brut, ledit réservoir ayant son convercle appliqué avec pression contre la matière, ce couvercle est un cône droit à base circulaire au sommet duquel est percé un orifice de sortie, la face du couvercle orientée vers la matière étant munie d'apprendices chauffants qui plongent dans ladite matière.

Selon un mode de réalisation, le couvercle est équipé d'au moins deux joints périphériques engagés dans les gorges dudit couvercle, ces joint ayant sur la partie de leur profil non engagée dans les gorges, une portion plate parallèle à la paroi du réservoir le long de laquelle le couvercle appliqué avec la pression sur la matière évolue, cette portion plate étant encadrée par deux pans coupés favorisant le centrage et le glissement le long du réservoir.

L'invention sera maintenant décrite plus en détail en référence aux figures jointes qui représentent :

– figure 1 : un schéma de la totalité de l'installation de distribution de matière plastique,
– figure 1A: en vue de dessus,
– figure 1B: en vue de profil,
– figure 2 : une vue plus détaillée du réservoir avec un couvercle appliqué sur la matière, de forme conique,
– figure 3 : une vue du détail d'un joint du couvercle appliqué sur la réserve,
– figure 4: une vue de dessus détaillé d'une pompe à engrenages internes disposée à la sortie du réservoir,
– figure 5 : une vue détaillée du magasin à volume variable placé en aval de la pompe selon la figure 4,
– figure 6 : une coupe au niveau des raccords tournants équipant les moyens de transfert reliant la pompe de la figure 4 au magasin de la figure 5.

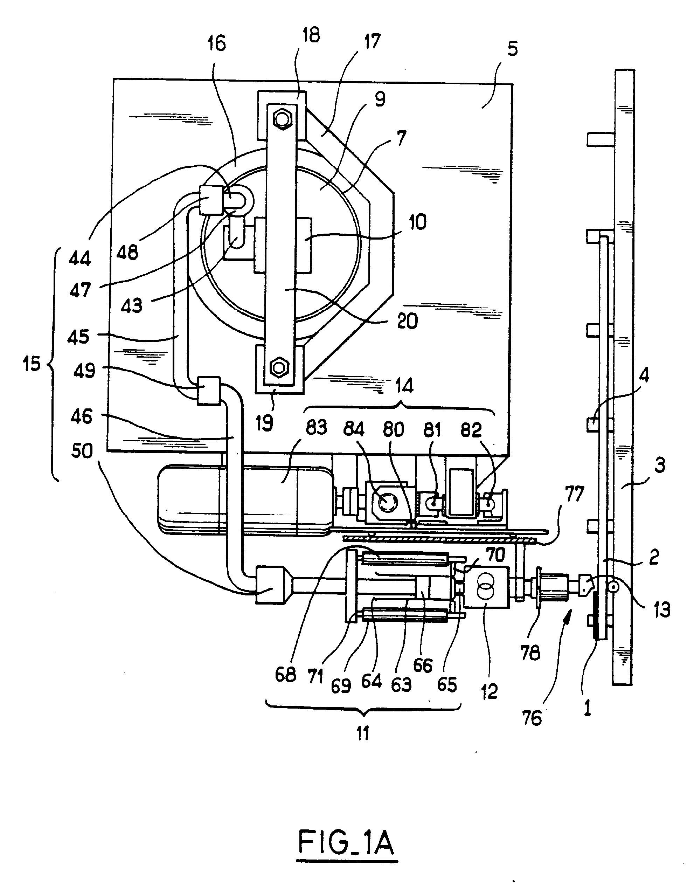

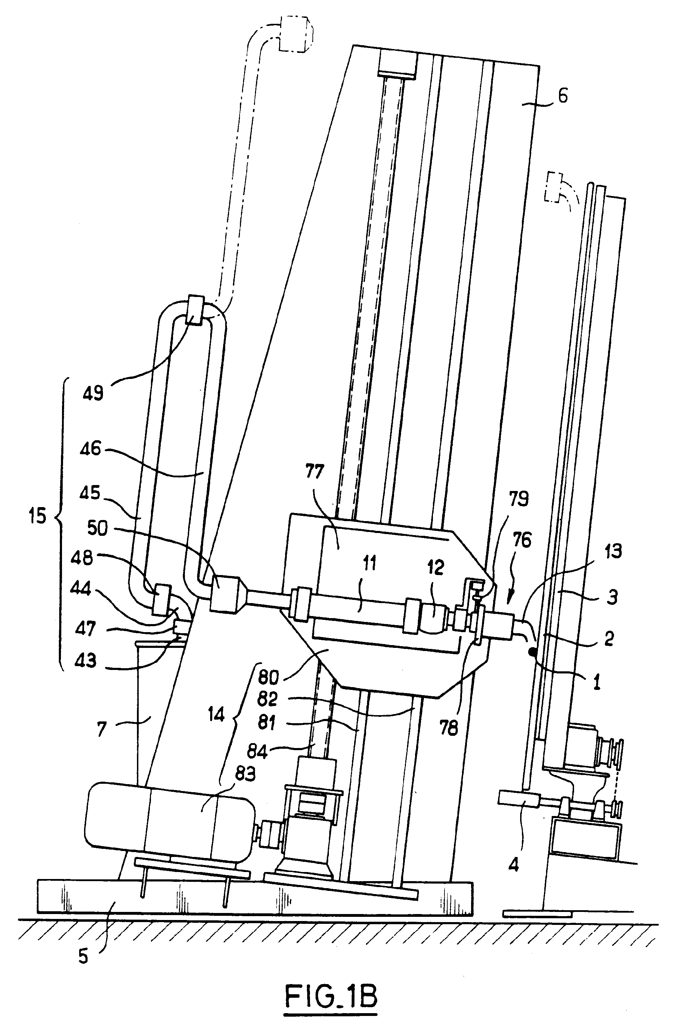

Les figures 1A et 1B donnent une vue d'ensemble de l'installation de préparation d'une matière plastique pour la fourniture d'un cordon destiné à servir de joint et d'intercalaire dans un vitrage multiple.

Ce cordon 1 est destiné à être déposé sur une feuille de verre 2, disposée verticalement ou sensiblement verticalement contre une paroi 3, notamment avec intercalation d'un coussin gazeux entre ladite paroi 3 et la feuille de verre 2, et reposant sur les rouleaux 4 d'un convoyeur vertical.

L'installation de préparation de la matière plastique est montée sur un bâti comprenant un socle 5 et un pupitre vertical 6 sur lequel reposent ou sont fixés les différents éléments de l'installation.

Cette installation comprend essentiellement un réservoir 7 de la matière première 8 à préparer et à distribuer sous la forme du cordon 1, équipé d'un couvercle 9 chauffé, de forme particulière détaillée plus loin, une pompe 10 à la sortie de ce réservoir 7, un magasin à volume variable 11, une pompe volumétrique 12, une buse orientable 13, des moyens 14 de translation de la buse 13 et du magasin 11 selon une direction différente de celle de déplacement des feuilles de verre 2, et en l'occurence suivant une direction verticale, orthogonale à la direction de déplacement des feuilles de verre 2 et parallèle au plan desdites feuilles de verre et de la paroi 3, et des moyens 15 de transfert de la matière première de la pompe 10 au magasin à volume variable 11.

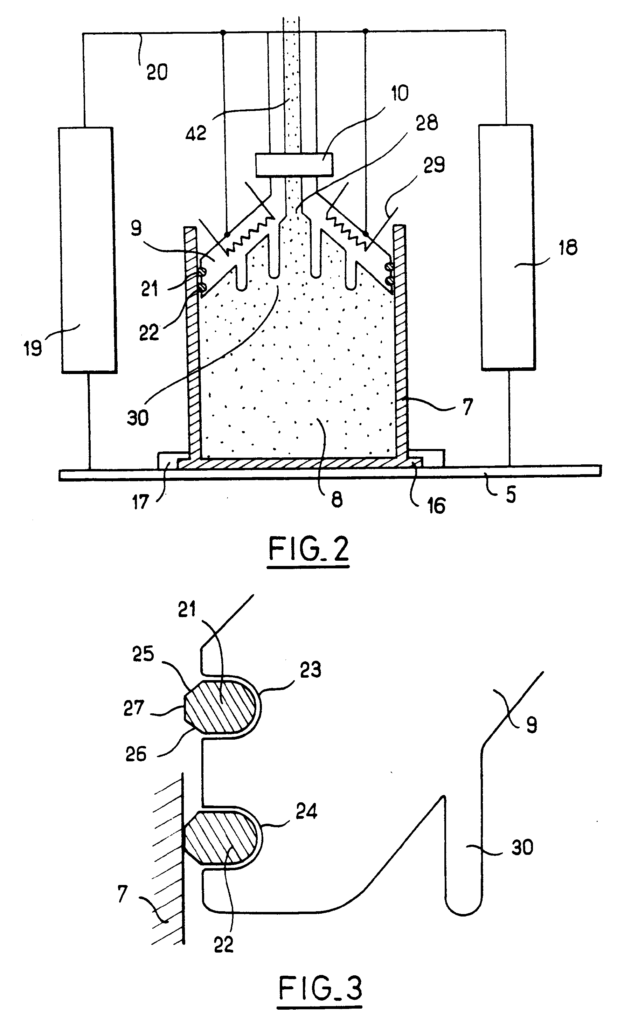

Le réservoir 7 possède une base 16 élargie par laquelle il est fixé sur le socle 5 grâce à un étrier 17. Ce réservoir 7 est généralement constitué par le fût dans lequel la matière plastique, par exemple à base de caoutchouc butyl, est livrée par le fournisseur. Comme plus particulièrement visible sur la figure 2, il est recouvert d'un couvercle 9 apte à s'y enfoncer à la manière d'un piston sous la pression de deux vérins latéraux 18 et 19 (visibles également sur la fig. 1A) agissant sur lui par l'intermédiaire d'un portique 20. Ce couvercle 9 formant piston est muni d'au moins deux joints annulaires 21 et 22 frottant sur les parois du fût de manière à réaliser l'étanchéité malgré les ondulations annulaires dont sont généralement pourvus les fûts. Ces joints 21 et 22 ont un diamètre extérieur légèrement supérieur à celui de l'intérieur du fût; ils sont pleins, massifs, durs (dureté Shore de l'ordre de 70°), en un matériau du type caoutchouc, sans jointure et comme montré en détail sur la figure 3, ils sont encastrés chacun dans une gorge 23, 24 du couvercle 9.

Avantageusement, pour permettre le centrage du couvercle 9 sur le réservoir 7 et son évolution à l'intérieur dudit réservoir, aussi bien dans le sens de l'enfoncement que dans le sens inverse, chaque joint 21, 22 a un profil muni de deux pans coupés 25, 26 suivant un angle de l'ordre de 20° avec la direction parallèle à la paroi latérale du réservoir 7 contre laquelle ils s'appuient, séparés par une portion plate 27 dont la surface est au moins le 1/3 de la surface totale hors de la gorge 23, 24 orientée vers la paroi du réservoir 7.

Ce couvercle 9 formant piston est d'une forme telle qu'il délimite un volume dont la section est d'autant plus réduite qu'elle est plus proche d'une sortie 28 qui l'équipe.

Il peut avoir la forme d'une surface conique, en particulier soit un cône, soit une pyramide suivant que le réservoir 7 est cylindrique ou prismatique, la sortie 28 étant disposée à la pointe du cône ou de la pyramide.

Généralement, les réservoirs 7 sont des fûts cylindriques et le couvercle 9 est alors de forme conique et en particulier un cône droit de base circulaire.

La surface de ce couvercle piston 9 est équipée de moyens chauffants tels des résistances électriques 29.

La face dirigée vers l'intérieur du réservoir 7 est en outre pourvue d'appendices 30 également chauffés.

Ces appendices 30 peuvent avoir des longueurs variables. De préférence, ils sont d'autant plus longs qu'ils sont situés plus près de l'axe du cône ou de la pyramide que constitue le couvercle 9.

Avantageusement, pour faciliter le logement du couvercle piston 9 dans le réservoir 7, notamment lorsqu'il arrive en fin de course, ces appendices 30 sont contenus à l'intérieur du volume délimité par ledit couvercle piston 9.

Pour permettre une utilisation de la totalité de la matière contenue dans le fût, le fond dudit fût opposé au couvercle conique 9, équipé d'appendices chauffants 30, peut être de forme complémentaire à celle du couvercle 9 avec ses appendices 30.

Suivant une variante intéressante le fond du fût 7 reste plat mais il est muni d'un revêtement non adhérent. Ce revêtement, du type teflon, silicone, graphite, talc, etc., peut être déposé directement sur le fond, ou mieux sur un fond intermédiaire, par exemple en papier ou carton.

Avantageusement, ce fond intermédiaire par exemple en papier siliconé, a la forme d'une couronne, et à la place de la partie évidée du centre de la couronne, on dépose le revêtement anti-adhérent directement sur le fond du fût 7.

La sortie 28 au travers du couvercle piston 9 du réservoir 7 alimente directement la pompe 10.

Avantageusement, compte-tenu de la viscosité et de la dureté importantes de la matière à base de caoutchouc butyl, même après l'extraction du réservoir 7, compte-tenu de la continuité de débit exigée, de l'importance du débit nécessaire, il s'agit d'une pompe 10 rotative à engrenages internes.

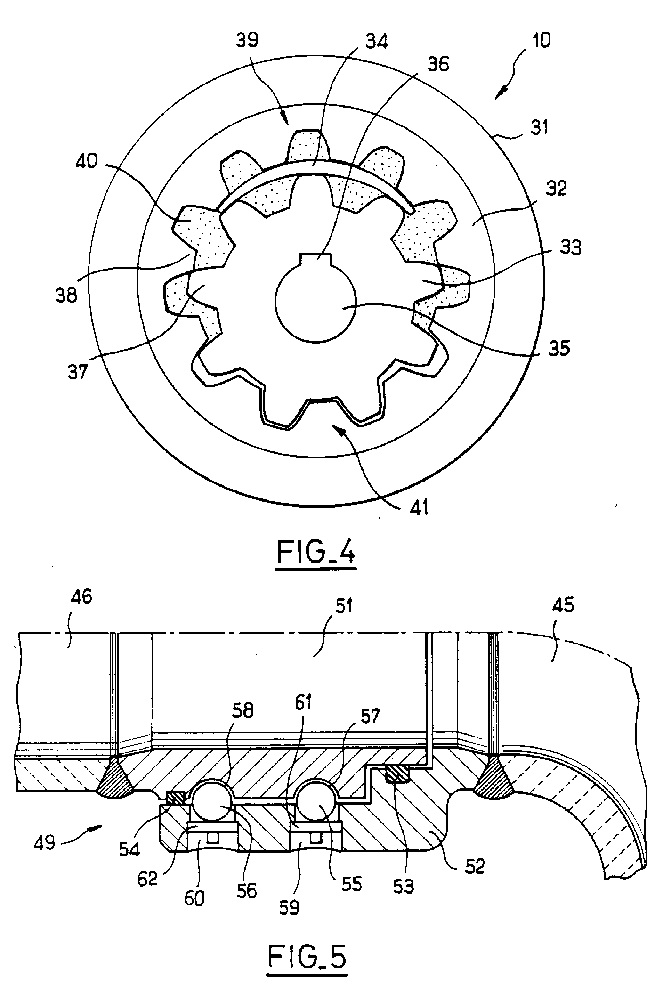

De préférence, pour éviter les inconvénients dus à une résistance au fonctionnement trop importante, en particulier au moment des démarrages, cette pompe 10 est mue hydrauliquement. Cette pompe est représentée schématiquement sur la figure 1A et montrée plus en détail en vue de dessus sur la figure 4.

Cette pompe 10 rotative à engrenages internes possède un corps de pompe 31 enfermant une couronne circulaire dentée 32, un rotor 33 également denté, dont les dents sont de forme complémentaire de la forme de celles de la couronne 32. Ce rotor 33 est décentré par rapport à la couronne 32 par un noyau de décentrage 34. Ce rotor 33 est percé en son centre d'un logement 35 avec rainure de clavetage 36 pour recevoir un arbre moteur et une clavette de blocage non représentés ici, destinés à entraîner le rotor 33 en rotation.

Les dents 37 du rotor 33 et celles 38 de la couronne 32 sont distantes les unes des autres dans la zone 39 qui entoure le noyau de décentrage 34 ménageant, ainsi entre elles des espaces 40 importants.

Au fur et à mesure que l'on s'écarte de cette zone 39, les dents 37 et 38 sont de mieux en mieux imbriquées les unes dans les autres, ce qui conduit à une restriction progressive des espaces 40.

Les espaces 40 sont pratiquement inexistants et les dents 37 et 38 parfaitement imbriquées les unes dans les autres dans la zone 41 diamétralement opposée au noyau de décentrage 34.

Avantageusement, comme cela est visible sur la figure 4, les dents 37 et 38 ont une forme trapézoïdale, ce qui accroît leur résistance mécanique et permet de disposer d'espaces 40 plus vastes qu'avec une autre forme de dents, notamment triangulaires.

Avantageusement, pour permettre un meilleur gavage des espaces 40 par la matière extraite du réservoir 7, celle-ci est amenée face auxdits espaces 40, dans la région 39 où ils sont les plus grands, à la fois pair le dessus et par le dessous par une double conduite non représentée sur les figures, résultant de la division d'une conduite 42 branchée sur la sortie 28 au travers du couvercle 9. Une conduite 43 de sortie de pompe, visible seulement sur la figure 1A est prévue sensiblement à l'aplomb de la zone 41 où les espaces 40 sont les plus réduits. Cette conduite 43 traverse le corps de pompe 31 suivant une direction sensiblement perpendiculaire au plan de la couronne 32 et du rotor 33. Avantageusement les embouchures des conduites d'alimentation et de la conduite d'évacuation 43 recouvrent plusieurs espaces 40.

Comme visible sur les figures 1A et 1B, la matière issue de la pompe 10 est transmise aux éléments de l'installation situés en aval, par les moyens 15 de transfert constitués d'une pluralité de tuyauteries rigides 44, 45, 46 résistant à la pression et à la chaleur, reliées les unes aux autres ainsi qu'aux dispositifs amont et aval par des raccords tournants 47, 48, 49, 50 dont un exemple est montré en coupe sur la figure 6.

Un tel raccord tournant, par exemple 49, comporte un élément mâle 51 emboîté dans un élément femelle 52, chacun de ces deux éléments 51 et 52 étant relié par soudure aux tuyauteries amont 45 et aval 46. L'étanchéïté entre ces deux éléments 51 et 52 est obtenue à l'aide de joints annulaires 53 et 54 et la rotation de la partie mâle 51 dans la partie femelle 52 est facilitée à l'aide de séries de billes 55 et 56 roulant dans des rainures toriques 57 et 58 alésées en partie dans l'élément mâle 51 en partie dans l'élément femelle 52.

Avantageusement, pour faciliter le roulement des billes 55 et 56 d'une part et leur échange lorsqu'elles sont usées d'autre part, ces billes sont montées élastiquement, à l'intérieur de cavités 59, 60, sur des coussinets 61, 62 démontables par l'extérieur de l'élément femelle 52.

De tels raccords avec un seul axe de rotation sont préférables, pour ce qui concerne l'étanchéïté à haute pression, à des systèmes tournants à rotules à axes de rotation multiples.

Les mouvements dans toutes les directions de l'espace sont rendus possibles par la juxtaposition d'une pluralité de tels raccords à un seul degré de liberté, ces raccords étant joints par des tuyauteries rigides coudées.

Les moyens de transfert 15 décrits ci-dessus sont avantageusement chauffés. Ils sont destinés à relier la conduite de sortie 43 de la pompe 10, susceptible d'évoluer en hauteur puisqu'elle est solidaire du couvercle piston 9 qui s'enfonce dans le réservoir 7, au magasin à volume variable 11 solidaire de la buse 13, susceptibles eux aussi de mouvements de translation dans une direction verticale pour pouvoir déposer un cordon 1 sur toute la hauteur de feuilles de verre 2. Pour éviter le blocage des tuyauteries 45 et 46 en position alignée lorsque le couvercle piston 9 est en position haute extrême et la buse 13 en position basse extrême ou vice versa, lesdites tuyauteries 45 et 46 ont une longueur telle qu'il subsiste toujours entre elles un angle inférieur à 180°.

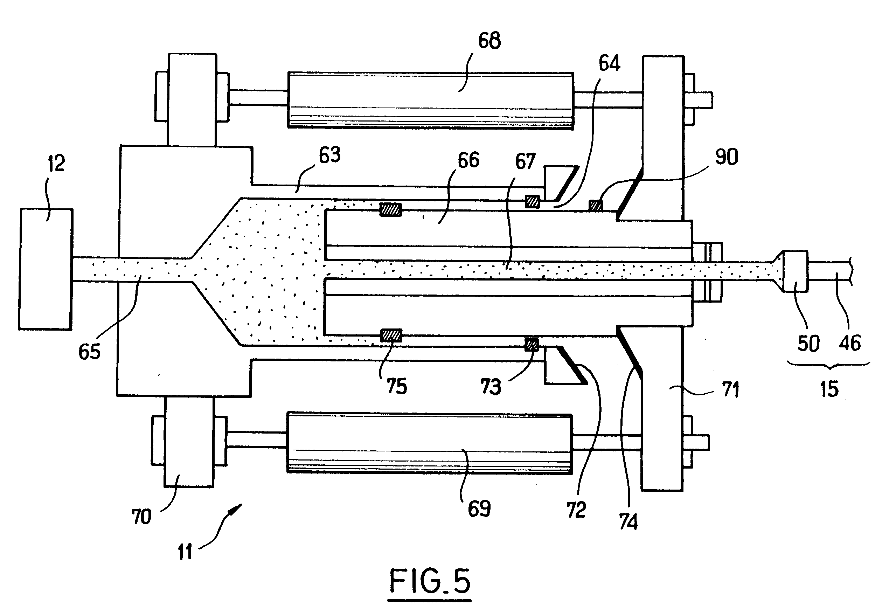

La matière plastique véhiculée par les moyens de transfert 15 est introduite en continu à débit régulier à l'intérieur du magasin à volume variable 11. Ce magasin 11 est visible en vue de dessus sur la figure 1A, en vue de côté sur la figure 1B et en vue plus détaillée sur la figure 5. Il comprend un cylindre 63 muni d'une ouverture d'entrée 64 et d'une sorbe 65 alimentant la pompe volumétrique 12. A l'intérieur de ce cylindre 63 peut se mouvoir un piston 66 traversé sur toute sa longueur par un canal 67 d'amenée de la matière plastique, qui débouche à l'intérieur du cylindre 63, ce canal 67 étant relié du côté de son extrémité amont au dernier raccord tournant 50 des moyens de transfert 15.

Le piston 66 est rappelé à l'intérieur du cylindre 63 par un système exerçant une force constante, notamment un ou plusieurs vérins, et comme dans l'exemple représenté, deux vérins 68 et 69 reliés chacun d'une part au cylindre 63 par une bride 70, d'autre part au piston 66 par une plaque 71. La force de rappel des vérins 68 et 69 est inférieure à la force exercée par la matière plastique pénétrant dans le magasin 11 pour éviter tout refoulement à contresens du sens normal de progression. L'extrémité du piston 66 enfoncée dans le cylindre 63 est équipée de segments annulaires de râclage. Des butées 72, 73 de fin de course du piston 66 à l'intérieur du cylindre 63, dans chacun des deux sens possibles de mouvement dudit piston 66 sont également prévues. Ces butées 72, 73 sont sollicitées par des éléments de contact 74, 75 appartenant au piston 66 et disposés, l'un 74 déterminant la position d'enfoncement maximum, sur la partie arrière du piston, l'autre 75 déterminant la position de retrait maximum, dont le volume maximum à l'intérieur du cylindre 63, sur l'extrémité avant du piston. Un élément intermédiaire 90 destiné à entrer en contact avec la butée 72 est prévu sur le corps du piston 66, cet élément déterminant le niveau bas de remplissage du cylindre 63 et déclenchant la mise en action des moyens amont de fourniture de matière plastique.

Le contact entre les butées 72 et 73 et les éléments correspondants 74, 75 commande l'arrêt de l'injection de matière plastique au travers de la sortie 65 et respectivement l'arrêt de la fourniture de matière au cylindre 63.

Avantageusement, pour éviter le refroidissement de la matière plastique et éventuellement pour parfaire son réchauffement de façon qu'elle atteigne la consistance désirée, les parois du cylindre 63 ainsi que celles du canal 67 sont réchauffées.

Ce magasin à volume variable 11 débite sa matière plastique avec une pression constante dans la pompe volumétrique 12 classique dont la vitesse de rotation est variable à la demande.

A la sortie de la pompe 12 la matière plastique est fournie à une tête d'extrusion 76 comportant essentiellement la buse 13. Cette tête d'extrusion 76 est montée sur un chariot 77 sollicité par des moyens tels des vérins et une vis sans fin actionnée par un moteur électrique non figurés permettant d'approcher ou d'éloigner la buse 13 de la feuille de verre 2. Le moteur électrique et la vis sans fin permettent d'ajuster finement l'avancée du chariot 77 portant la buse 13, notamment en fonction de l'épaisseur des feuilles de verre 2, tandis que les vérins permettent des mouvements d'importance prédéterminée.

Cette tête d'extrusion est montée sur une couronne 78 tournante autour d'un axe perpendiculaire au plan de la paroi 3 verticale ou sensiblement verticale de façon à orienter correctement la buse 13 vis à vis des feuilles de verre en fonction du sens de déplacement relatif de ladite buse et desdites feuilles de verre. En effet, comme enseigné dans le brevet français n° 2 294 313 la buse doit faire avec la feuille de verre un angle compris entre 15 et 45° et de préférence entre 25 et 35°.

Pour bloquer la couronne 78 dans des positions prédéterminées, un poinçon de blocage 79 s'engage dans des encoches prévues à cet effet dans la couronne 78, encoches non représentées sur les figures.

L'ensemble magasin à volume variable 11, pompe volumétrique 12, tête d'extrusion 76, chariot 77 est déplaçable en translation relativement aux feuilles de verre 2 sous l'action des moyens 14 détaillés ci-dessous. Pour cela cet ensemble est monté sur une platine 80 apte à se déplacer le long de deux glissières 81, 82 parallèles à la paroi 3 et donc au plan des feuilles de verre 2, suivant une direction différente de celle du déplacement provoqué par le convoyeur vertical à rouleaux 4 et en particulier suivant une direction orthogonale à celle imprimée aux feuilles de verre 2 par ce convoyeur à rouleaux 4. Le mouvement le long de ces deux glissières 81, 82 est provoqué par un moteur 83 qui entraîne en rotation une vis sans fin 84 parallèle aux glissières 81 et 82, cette vis sans fin 84 étant engagée dans des douilles à billes non figurées, solidaires de la platine 80. Les glissières 81 et 82 ainsi que la vis sans fin 84 sont fixées le long du pupitre vertical 6.

Comme connu en soi la buse 13 est également équipée d'un système de réglage de la hauteur du cordon 1 extrudé, ainsi que d'un coupe cordon, non représentés.

Comme également connu en soi d'après le document français de brevet 2 207 799, un système connu en soi apte à créer une dépression dans le circuit de fourniture de la matière plastique est disposé en dérivation immédiatement en amont de la buse 13. Ce système n'est également pas représenté sur les figures.

L'installation décrite précédemment fonctionne de la manière suivante :

La matière plastique 8, par exemple, à base de caoutchouc butyl, est fournie dans un fût 7. Celui-ci est fixé sur le socle 5 par l'étrier 17 qui enserre sa base 16. Le couvercle 9 en forme de cône est disposé sur ce fût puis pressé contre la matière qui y est contenue par les vérins 18 et 19. Sous l'action de cette pression et' également du chauffage produit par les appendices chauffants 30 et par la paroi de ce piston conique, la matière chapeautée par le couvercle piston 9 est progressivement ramollie et extraite du fût 7 au travers de la sortie 28. La pression sous laquelle la matière plastique est extraite est toutefois insuffisante pour la véhiculer au travers de tout le circuit de distribution jusqu'à la buse de sorbe 13. Cette pression est cependant suffisante pour gaver la pompe 10, d'autant plus que le gavage peut se faire sur les deux faces de la pompe 10 par les deux conduites d'alimentation. Cette pompe du fait de cette double alimentation, en raison de la forme particulière de ses dents, peut restituer dans sa conduite de sortie 43, un débit régulier de matière plastique sous une pression bien supérieure à celle qu'elle avait avant ladite pompe.

Cette pression dans la conduite de sortie peut-être de l'ordre de 300 ou 350 bars. Grâce à cette pression élevée, il n'est pas nécessaire de trop chauffer la matière pour la véhiculer jusqu'à la buse 13, et on ne risque donc pas de la dégrader.

A la sortie de cette pompe 10 la matière plastique sous pression élevée, cependant à température de l'ordre de 100 °C est introduite dans les tuyauteries et les raccords tournants du système de transfert 15. Grâce à ce système de transfert 15, généralement en acier, les pressions importantes, ainsi que la température relativement élevée, peuvent être supportées sans fuites.

La pluralité de tuyauteries rigides 44, 45, 46 et de raccords tournants 47, 48, 49, 50, malgré le degré de liberté unique de chacun desdits raccords, permet de transférer la matière plastique de la pompe 10 qui descend strictement verticalement dans le fût 7, au magasin à volume variable 11 qui évolue lui aussi, le long des glissières 81, 82 suivant une direction légèrement différente, à savoir généralement inclinée d'environ 5° par rapport à la verticale. Ainsi grâce à ces mouvements possibles, la tuyauterie 46 et le raccord tournant 50 peuvent prendre la position indiquée en pointillés sur la figure 1B, en vue d'alimenter la buse 13 disposée vers le haut de la feuille de verre 2 comme représenté en pointillés sur cette même figure.

Quelles que soient les positions relatives du couvercle piston 9 et de la buse 13 ou du magasin à volume variable 11, l'acheminement de la matière 8 a toujours lieu et dans les mêmes conditions.

Le magasin 11 est donc alimenté en continu avec un débit quelquefois cependant trop faible pour extruder en continu certains cordons 1 très hauts, de l'ordre de 15 mm et plus, sur des feuilles de verre 2 de grandes dimensions, pouvant avoir des périmètres de près de 15 m. Grâce à ce magasin 11 une réserve intermédiaire de matière peut être constituée en particulier en profitant des arrêts d'extrusion au travers de la buse 13, entre deux feuilles de verre 2 ou encore aux angles desdites feuilles de verre. Pendant ces arrêts le piston 66 recule dans le cylindre 63 augmentant ainsi la contenance du magasin 11.

Au contraire, lors de l'extrusion d'un cordon de grande hauteur et en général de grande section, si le débit continu fourni par le piston conique chauffant 9 et la pompe rotative à engrenages internes 10 est inférieur au débit sortant au travers de la buse 13, le débit supplémentaire nécessaire est obtenu en vidant progressivement la réserve constituée dan le magasin 11. Dans ce cas le piston 66 avance au contraire à l'intérieur du cylindre 63. Ainsi, par exemple, lorsque pour fabriquer un cordon 1 de hauteur importante on a besoin de 2,8 kg de matière par minute, grâce à la réserve accumulée dans le magasin à volume variable, on peut se contenter d'une fourniture de matière par le piston conique chauffant 9 et la pompe à engrenages 10, en continu, de 1,3 kg par minute. Ce magasin à volume variable 11 permet également par action des vérins latéraux 68 et 69 de régulariser la pression de la matière plastique, régularisation qui est particulièrement importante pour l'alimentation de la pompe volumétrique 12.

La pompe volumétrique 12 dont on règle le débit de sorbe en agissant sur le moteur qui la commande, fournit la matière plastique au débit désiré pour l'extrusion d'un cordon d'une section déterminée. La buse d'extrusion 13 est positionnée correctement vis à vis des feuilles de verre 2, en distance et en orientation suivant le sens du déplacement relatif de la buse 13 et de la feuille de verre 2. Une fois que la buse 13 est correctement orientée par rotation de la couronne 78 qui la porte, le poinçon 79 vient bloquer ladite couronne.

Si le cordon 1 doit être déposé le long d'une parallèle à la direction de déplacement fournie par le convoyeur à rouleaux 4, la buse 13 reste fixe, et extrude du cordon pendant que la feuille de verre défile devant elle.

Si au contraire le cordon 1 doit être déposé le long d'une parallèle aux glissières 81, 82, le convoyeur à rouleaux 4 reste à l'arrêt et la platine 80 se déplace régulièrement, sous l'action du moteur 83 agissant sur la vis sans fin 84 et sur les douilles à billes. La buse est ainsi animée d'un mouvement de translation régulier et elle dépose du cordon 1 sur la feuille de verre 2 immobile.

On peut également en pilotant simultanément le mouvement de la platine 80 et celui du convoyeur à rouleaux 4 obtenir un dépôt du cordon suivant des lignes autres que verticales et horizontales.

On peut donc, grâce à cette installation de préparation d'une matière plastique, obtenir en continu à l'aide de plusieurs étapes combinées, à la sortie d'une buse 13 éventuellement mobile, un cordon 1 de ladite matière plastique à une température, à un débit, à une pression, à une viscosité et à une dureté désirés alors qu'à l'origine de l'installation la matière est à température bien plus basse, la viscosité et la dureté sont bien plus élevées, alors également qu'un chauffage seul serait beaucoup trop long pour ramollir la matière initiale suivant la consistance voulue et risquerait même d'ailleurs de dégrader ladite matière.

Lorsque la matière contenue dans le fût 7 est épuisée, le couvercle 9 conique fripé des appendices chauffants 30 est retiré du fût 7. Dans le cas d'un fond de fût muni d'un revêtement anti-adhérent, on retire en même temps à l'intérieur du couvercle conique une certaine quantité de matière plastique, que l'on superpose à la matière du nouveau fût, ce qui permet de redémarrer l'injection immédiatement et ce qui évite de purger.

## Revendications

1. Installation de préparation d'une matière plastique du type à base de caoutchouc butyl comportant un réservoir (7) contenant la matière plastique brute ayant une viscosité et une dureté élevées et une buse (13) de sortie pour l'extrusion de ladite matière plastique, notamment sous la forme d'un cordon calibré, sous une viscosité et une dureté inférieures à celles de la matière à l'état brut, ledit réservoir (7) ayant son couvercle (9) appliqué avec pression contre la matière, **caractérisée en ce que** ce couvercle (9) est un cône droit à base circulaire au sommet duquel est percé un orifice de sorte (28), la face du couvercle orientée vers la matière étant munie d'appendices chauffants (30) qui plongent dans ladite matière.

2. Installation selon la revendication 1, **caractérisée en ce que** le couvercle (9) est équipé d'au moins deux joints périphériques (21, 22) engagés dans des gorges (23, 24) dudit couvercle (9), ces joints (21, 22) ayant sur la partie de leur profil non engagée dans les gorges, une portion plate parallèle à la paroi du réservoir le long de laquelle le couvercle appliqué avec pression sur la matière évolue, cette portion plate étant encadrée par deux pans coupés favorisant le centrage et le glissement le long du réservoir.

3. Installation selon la revendication 2, **caractérisée en ce que** les plans coupés forment un angle de l'ordre de 20° avec la portion plate.

4. Installation selon l'une des revendications 2 ou 3, **caractérisée en ce que** la portion plate représente environ 1/3 de la surface hors gorge.

5. Installation selon l'une des revendications 2 à 5, **caractérisée en ce que** le matériau des joints périphériques (21, 22), du type caoutchouc, a une dureté Shore de l'ordre de 70°.

6. Installation selon l'une des revendications précédentes, **caractérisée** en ce **que** le fond du réservoir (7) opposé au couvercle (9) est muni d'un revêtement anti-adhérent du type téflon, silicone, graphite, talc.

7. Installation selon la revendication 6, **caractérisée en ce que** ledit revêtement anti-adhérent est déposé sur un fond intermédiaire de faible épaisseur de type papier, carton.

8. Installation selon la revendication 7, **caractérisée en ce que** ledit fond intermédiaire est une couronne.

9. Installation selon l'une des revendications précédentes, **caractérisée en ce qu'**elle comporte en outre une pompe (10) disposée à la sortie du couvercle (9) du type pompe rotative à engrenages internes ayant des alimentations sur ses deux faces.

10. Installation selon l'une des revendications précédentes, **caractérisée en** ce qu'elle comporte en outre une pompe (10) disposée à la sortie du couvercle (9) du type pompe rotative à engrenages internes à dents trapezoïdales.

**Patentansprüche**

1. Vorrichtung zur Aufbereitung von Kunststoff auf Butylkautschukbasis mit einem Behälter (7), der den unbearbeiteten Kunststoff von erhöhter Viskosität und Härte enthält, und einer Austrittsdüse (13) für die Extrusion des Kunststoffes, insbesondere in Form eines kalibrierten Strangs, bei einer Viskosität und einer Härte, die niedriger als diejenigen des Materials im Rohzustand sind, wobei durch den Deckel (9) des Behälters (7) Druck auf das Material ausgeübt wird, **dadurch gekennzeichnet, daß** der Deckel (9) ein gerader Kegel mit kreisförmiger Grundfläche ist, dessen Scheitel eine Austrittsöffnung (28) aufweist, wobei die dem Material zugewandte Seite des Deckels mit Heizelementen (30) versehen ist, die in das Material eintauchen.

2. Vorrichtung nach Anspruch 1, **dadurch gekennzeichnet, daß** der Deckel (9) wenigstens zwei in Nuten (23,24) des Deckels (9) angeordnete Umfangsdichtungen (21,22) aufweist, wobei diese Dichtungen (21,22) an demjenigen Teil ihres Profils, der nicht in die Nuten eingreift, einen flachen Abschnitt aufweisen, der parallel zu derjenigen Wand des Behälters ist, an der entlang sich der auf das Material Druck ausübende Deckel hin- und herbewegt, wobei der flache Abschnitt beidseitig schräge Kanten aufweist, die dazu dienen, die Zentrierung und das Gleiten in dem Behälter zu verbessern.

3. Vorrichtung nach Anspruch 2, **dadurch gekennzeichnet, daß** die schrägen Kanten einen Winkel von etwa 20° mit dem flachen Abschnitt bilden.

4. Vorrichtung nach einem der Ansprüche 2 oder 3, **dadurch gekennzeichnet, daß** der flache Abschnitt etwa 1/3 der Oberfläche außerhalb der Ausnehmungen darstellt.

5. Vorrichtung nach einem der Ansprüche 2 bis 4, **dadurch gekennzeichnet, daß** der etwa aus Kautschuk bestehende Werkstoff der Umfangsdichtungen (21, 22) eine Shorehärte von etwa 70° aufweist.

6. Vorrichtung nach einem der vorhergehenden Ansprüche, **dadurch gekennzeichnet, daß** der dem Deckel ( 9 ) gegenüberliegende Boden des Behälters (7) eine Antiadhäsivbeschichtung etwa aus Teflon, Silikon, Graphit oder Talk aufweist.

7. Vorrichtung nach Anspruch 6, **dadurch gekennzeichnet, daß** die Antiadhäsivbeschichtung auf einem dünnen Zwischenboden etwa aus Papier oder Karton aufgebracht ist.

8. Vorrichtung nach Anspruch 7, **dadurch gekennzeichnet, daß** der Zwischenboden einen Kranz darstellt.

9. Vorrichtung nach einem der vorhergehenden Ansprüche, **dadurch gekennzeichnet, daß** sie außerdem eine am Ausgang des Deckels (9) angeordnete Pumpe (10) enthält, wie etwa eine Rotationspumpe mit Innengetriebe, die beidseitig Beschickungsstellen aufweist.

10. Vorrichtung nach einem der vorhergehenden Ansprüche, **dadurch gekennzeichnet, daß** sie außerdem eine am Ausgang des Deckels (9) angeordnete Pumpe (10) enthält, wie etwa eine Rotationspumpe mit einem Innengetriebe mit trapezförmigen Zähnen.

**Claims**

1. Apparatus for preparation of a plastics material of the type based upon butyl rubber, comprising a reservoir (7) containing the crude plastics material, having a high viscosity and high hardness, and an outlet nozzle (13) for the extrusion of said plastics material, notably in the form of a calibrated cord, at a viscosity and a hardness less than those of the material in the crude state, said reservoir (7) having its lid (9) applied with pressure onto the material, characterized in that this lid (9) is a right cone having a circular base, at the apex of which is pierced an outlet orifice (28), the face of the lid towards the material being provided with heating appendages (30) which penetrate into said material.

2. Apparatus according to Claim 1, characterized in that the lid (9) is provided with at least two peripheral seals (21, 22) engaged in grooves (23, 24) of said lid (9), these seals (21, 22) having, on the part of their profile not engaged in the grooves, a flat portion parallel to the wall of the reservoir, along which the lid applied with pressure onto the material moves, this flat portion being flanked by two inclined flats promoting the centring and sliding along the reservoir.

3. Apparatus according to Claim 2, characterized in that the inclined flats make an angle of the order of 20° with the flat portion.

4. Apparatus according to one of Claims 2 or 3, characterized in that the flat portion represents approximately 1/3 of the surface outside the groove.

5. Apparatus according to one of Claims 2 to 5, characterized in that the material of the peripheral seals (21, 22), of the rubber type, has a shore hardness of the order of 70°.

6. Apparatus according to one of the preceding Claims, characterized in that the end of the reservoir (7) opposite the lid (9) is provided with an anti-stick coating of the Teflon, silicone, graphite or talc type.

7. Apparatus according to Claim 6, characterized in that said anti-stick coating is deposited onto an intermediate end of small thickness of paper or cardboard type.

8. Apparatus according to Claim 7, characterized in that said intermediate end is an annulus.

9. Apparatus according to one of the preceding Claims, characterized in that it comprises, in addition, a pump (10) disposed at the outlet from the lid (9) of the rotary pump type having internal gears with feeds onto both its faces.

10. Apparatus according to one of the preceding Claims, characterized in that it comprises, in addition, a pump (10) disposed at the outlet from the lid (9) of the rotary pump type having internal gears with trapezoidal teeth.

# FIG_1A

FIG.1B

FIG_2

FIG_3

12

FIG_4

FIG_5

FIG.5